# EUROPÄISCHE PATENTSCHRIFT

(11) **EP 3 606 795 B1**
(45) Veröffentlichungstag und Bekanntmachung des Hinweises auf die Patenterteilung: **10.03.2021**
(21) Anmeldenummer: 18717298.6
(22) Anmeldetag: 05.04.2018
(51) Int. Cl.: B60T 7/12, B60T 8/172

(54) **BREMSREGELUNGSSYSTEM FÜR KRAFTFAHRZEUGE**
BRAKE CONTROL SYSTEM FOR MOTOR VEHICLES
SYSTÈME DE RÉGULATION DU SYSTÈME DE FREINAGE POUR DES VÉHICULES AUTOMOBILES

(30) Priorität: 06.04.2017 DE 102017205892
(43) Veröffentlichungstag der Anmeldung: 12.02.2020
(73) Patentinhaber: Bayerische Motoren Werke Aktiengesellschaft, 80809 München (DE)
(72) Erfinder: HÄRDTL, Sebastian, 82041 Oberhaching (DE)
(86) Internationale Anmeldenummer: PCT/EP2018/058746
(87) Internationale Veröffentlichungsnummer: WO 2018/185228

(56) Entgegenhaltungen:
- EP-A1- 2 907 709
- DE-A1-102007 015 889
- DE-A1-102015 215 427

## Beschreibung

Die Erfindung betrifft ein Bremsregelungssystem für Kraftfahrzeuge mit einer Feststellbremsfunktion.

Aus verschiedenen Patentdokumenten, so z. B. aus DE 10 2006 026 626 A1, DE 10 2004 034 067 A1, DE 10 2007 006 700 A1, sind Bremsregelungssysteme bekannt, die zur Verhinderung des Wegrollens von Fahrzeugen - insbesondere, aber nicht notwendigerweise, an Steigungen - dienen sollen. Meist wird dabei in wenigstens einem Betriebszustand bei betätigtem Bremspedal oder durch ein anderes Betätigungselement Bremskraft an wenigstens einem Rad eines Fahrzeugs abhängig oder unabhängig vom Maß der Pedalbetätigung oder eines anderen Betätigungselementes gehalten oder aktiv aufgebaut. Für die Aktivierung bzw. Deaktivierung der Funktion sind dabei unterschiedliche Eintritts- und/oder Auslösebedingungen gemeinsam oder alternativ vorgesehen. Die oben genannten Patentdokumente beschäftigen sich insbesondere mit der Verbesserung des Übergangs von einer Feststellbremsfunktion in einen Anfahrvorgang.

Aus dem nächstliegenden Stand der Technik, der EP 2 907 709 A1, ist ein Bremsregelsystem bekannt, wobei im Stillstand des Fahrzeugs eine automatische Feststellfunktion aktivierbar ist und bei Aktivierung der Funktion der erforderliche Bremsdruck abhängig von der Längsneigung bestimmbar ist.

Bekannt sind derartige Bremsregelungssysteme beispielsweise unter den Namen Anfahrassistent, Bergassistent, Hillhold(er) oder Automatic Hold. Zusammenfassend werden diese Verfahren im Folgenden als automatische Feststellbremsfunktionen bezeichnet. Gemein ist allen diesen automatischen Feststellbremsfunktionen beispielsweise ein hydraulisches, mechanisches, elektrohydraulisches, elektromechanisches oder pneumatisches, elektronisch regelbares Bremssystem, mittels dem das Festhalten und die Verhinderung des ungewollten Anrollens des Fahrzeuges bewerkstelligt wird. Auch sind Verfahren bekannt, bei denen das Anrollen des Fahrzeuges über das Getriebe (insbesondere Automatikgetriebe) verhindert wird. Bei all diesen Funktionen wird beispielsweise durch Betätigung des Bremspedals oder der Handbremse oder über damit in Verbindung stehende Schaltelemente bzw. auch sonstige Betätigungselemente (z. B. Schalter, Taster o. ä.) eine Aktivierung der Funktion durchgeführt; eine Deaktivierung erfolgt über die gleichen oder auch andere Hilfsmittel (wie z. B. Gaspedalstellung, Kupplungssignal, Antriebsmomentsignale des Motors o. ä. bzw. auch nach Ablauf einer definierten Haltezeit).

Wichtige weitere benötigte Hilfsmittel, Steuersignale oder Schaltmittel für die Darstellung der Funktionen sind beispielsweise meist ein oder mehrere Geschwindigkeitssignale für die Erkennung des Fahrzeugstillstands, mechanische, pneumatische oder hydraulische Aktuatoren (ebenso sind prinzipiell auch elektro-hydraulische, elektro-pneumatische oder elektrische Aktuatoren denkbar) in den Radbremsen bzw. in den Zuleitungen zu den Radbremsen, über die Bremswirkung auf- und abgebaut bzw. zumindest temporär gehalten werden kann (z. B. Steuer/Regelventile integriert in Form einer vorhanden Steuer- oder Regeleinrichtung, beispielsweise ABS-, ASC-/ASR-, DSC-/ESP-/EHB-System), gegebenenfalls auch Längsbeschleunigungs- oder Neigungssensoren, mittels derer die Fahrbahnlängsneigung ermittelt und daraus die erforderliche Bremskraft für sicheren Stillstand des Fahrzeugs und danach das für die Fahrbahnneigung benötigte Anfahrmoment bestimmt werden können und ein bzw. mehrere Drucksensoren, mit deren Hilfe der Bremsdruck bzw. das aufgebrachte Bremsmoment an der bzw. den Radbremsen ermittelt werden kann.

Es ist Aufgabe der Erfindung, eine automatische Feststellbremsfunktion auch für Offroad-Anwendungen zu verbessern.

Diese Aufgabe wird erfindungsgemäß durch die Merkmale des Patentanspruchs 1 gelöst. Vorteilhafte Weiterbildungen der Erfindung sind die Gegenstände der abhängigen Ansprüche.

Das erfindungsgemäße Bremsregelungssystem weist insbesondere eine elektronische Steuereinheit dergestalt auf, dass durch sie im Stillstand des Kraftfahrzeuges eine automatische Feststellbremsfunktion aktivierbar ist, wobei bei Vorliegen einer Aktivierungsbedingung für die Feststellbremsfunktion der hierfür erforderliche Bremsdruck zumindest abhängig von der Längsneigung und abhängig von einer geschätzten Aufstandskraftverteilung aller Räder und/oder von einer geschätzten Fähigkeit aller Räder, Brems-/bzw. Antriebsmoment auf den Untergrund zu übertragen ("Momentübertragungsfähigkeit"), bestimmbar ist. Im Folgenden gelten alle Aussagen zur Aufstandskraftverteilung auch für die Momentübertragungsfähigkeit und weitere äquivalente Größen.

Dabei ist vorzugsweise der Bremsdruck umso höher vorgebbar je mehr Räder eine reduzierte Aufstandskraft aufweisen. Es kann aber auch grundsätzlich ein einziger definierter erhöhter Bremsdruck für alle Räder vorgebbar sein, wenn wenigstens ein Rad eine Aufstandskraft aufweist, die kleiner als ein definierter Schwellwert ist.

Vorzugsweise ist mittels der Steuereinheit erkennbar, welches Rad eine Aufstandskraft unterhalb eines unteren Grenzwertes aufweist, wonach eine Verteilung der erforderlichen Bremskraft (Gesamtbremskraft) nur auf die Räder mit einer Aufstandskraft oberhalb dieses Grenzwertes vorgebbar ist.

In einer Weiterbildung der Erfindung ist durch entsprechende Ausgestaltung der Steuereinheit die Aufstandskraft (gleichbedeutend mit einer der Aufstandskraft proportionalen Größe) der einzelnen Räder auf Basis der Radaufhängungshöhe der einzelnen Räder und/oder des Schlupfes der einzelnen Räder und/oder der Querneigung des Fahrzeuges ermittelbar.

Weiterhin kann die Steuereinheit derart ausgestaltet sein, dass der Reibwert der Fahrbahn am Ort des durch die Feststellbremsfunktion im Stillstand gehaltenen Kraftfahrzeugs zumindest für die angetriebenen Räder (z.B. alle bei einem Allrad-Antrieb) ermittelbar ist und der Bremsdruck auch abhängig vom Reibwert unterhalb der einzelnen zumindest angetriebenen Räder bestimmbar ist. Diese Weiterbildung ist besonders bei Allrad-Antrieb im Offroad-Betrieb und bei vergleichsweise zwangsweise damit verbundener geringer Fahrgeschwindigkeit vorteilhaft, da ein Stillstand fast am gleichen Ort wie eine vorhergehende sehr langsame Fahrt stattfindet. Die Reibwert-Abhängigkeit wird vorzugsweise nur dann berücksichtigt, wenn der Reibwert eines Rades mit vergleichsweise hoher Aufstandskraft vergleichsweise niedrig ist. Anders ausgedrückt ist der Reibwert beispielsweise bei einem Rad mit einer Aufstandskraft unterhalb des definierten unteren Grenzwertes nicht relevant und kann daher bei diesem Rad unberücksichtigt bleiben.

Der Erfindung liegen folgende weitere Überlegungen zugrunde:
Die Erfindung geht von bekannten Feststellbremsfunktionen bzw. Anfahrassistenten ohne Anpassung für Offroad-Situationen aus.

Für SUVs kann der bestehende Stand der Technik in Offroad-Situationen zu Einschränkungen in der Unterstützung durch den Anfahrassistenten beim Anfahren führen. Der Anfahrassistent berechnet auf Basis der gemessenen Längsbeschleunigung (Sensor) eine vorliegende Steigung und daraus das nötige Haltemoment der Bremse und das nötige Anfahrmoment des Motors.

Ist das Haltemoment der Bremse in aktivierter Feststellbremsfunktion vor dem Wieder-Anfahren zu gering, rollt das Fahrzeug beim Lösen der Bremse rückwärts. Gerade in schwierigen Offroad-Situationen kommt es aber auf ein zuverlässiges Halten und feinfühliges Anfahren an. Insbesondere in Situationen mit Verschränkung (nur zwei statt vier Räder übertragen den Großteil der Gewichts- und Antriebs- bzw. Bremskraft) stimmt die Relation zwischen ermittelter Steigung und Brems- bzw. Motormoment aber nicht, da die übertragbaren Kräfte (Momente) schlimmstenfalls nur halb so groß sind.

Daher wird erfindungsgemäß bei erkannter reduzierter Aufstandskraft an einzelnen Rädern und insbesondere im Verschränkungs-Fall (erhöhter Schlupf der diagonal gegenüberliegenden Räder kurz vor Stillstand) der Bremsdruck an diese Situation angepasst: Das nötige Bremsmoment zum Halten des Fahrzeugs wird erhöht. Folge ist danach auch ein erhöhtes nötiges Motormoment zum Wieder-Anfahren.

Durch die Erfindung wird das Fahrzeug auch in Offroad-Situationen sicher vom Anfahrassistenten (kann auch auf Funktionen wie Auto Hold etc. erweitert werden) während der aktivierten Feststellbremsfunktion gehalten und rollt nicht unkontrolliert rückwärts. Beim Wieder-Anfahren kann sich der Fahrer auf die schwierige Situation konzentrieren und kann ohne Zweifußbetätigung (ein Fuß betätigt die Bremse, der andere Fuß betätigt das Fahrpedal) das Fahrzeug gut dosiert wieder in Bewegung setzen. Gerade bei SUVs mit klassischerweise beschränkter Verschränkungsfähigkeit (d.h. schon bei kleinen Verschränkungen können nicht mehr alle Räder den Boden berühren) ist die beschriebene Situation relativ schnell erreicht, wenn man nur etwas abseits befestigter Straßen unterwegs ist.

In der Zeichnung ist ein Ausführungsbeispiel der Erfindung dargestellt. Es zeigt
- Fig. 1: eine schematische Darstellung der wichtigsten Komponenten des erfindungsgemäßen Bremsregelsystems und
- Fig. 2: zwei Betriebssituationen, für die das erfindungsgemäße Bremsregelsystem in besonders vorteilhafter Weise anwendbar ist.

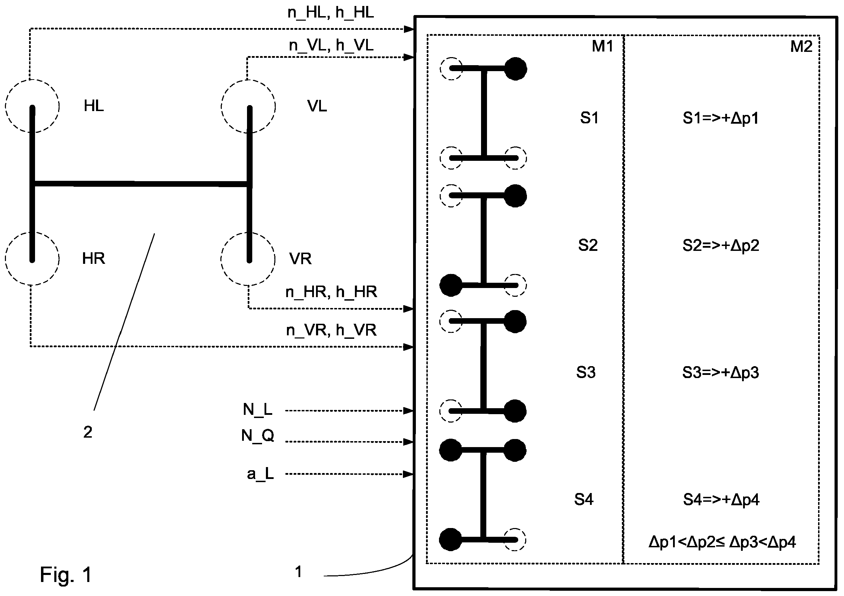

In Fig. 1 ist schematisch ein Bremsregelungssystem für ein vorzugsweise Allrad angetriebenes Kraftfahrzeug 2 mit einer elektronischen Steuereinheit 1, die beispielsweise in einem ohnehin vorhandenen Bremssteuergerät integriert sein kann, dargestellt.

Die Steuereinheit 1 kann beispielsweise folgende Eingangssignale erfassen:
- Die Drehzahl des Rades vorne rechts n_VR
- Die Drehzahl des Rades vorne links n_VL
- Die Drehzahl des Rades hinten rechts n_HR
- Die Drehzahl des Rades hinten links n_HL
- Die Radaufhängungshöhe des Rades vorne rechts h_VR
- Die Radaufhängungshöhe des Rades vorne links h_VL
- Die Radaufhängungshöhe des Rades hinten rechts h_HR
- Die Radaufhängungshöhe des Rades hinten links h_HL
- Die Fahrzeuglängsneigung N_L
- Die Fahrzeugquerneigung N_Q
- Die Längsbeschleunigung a_L

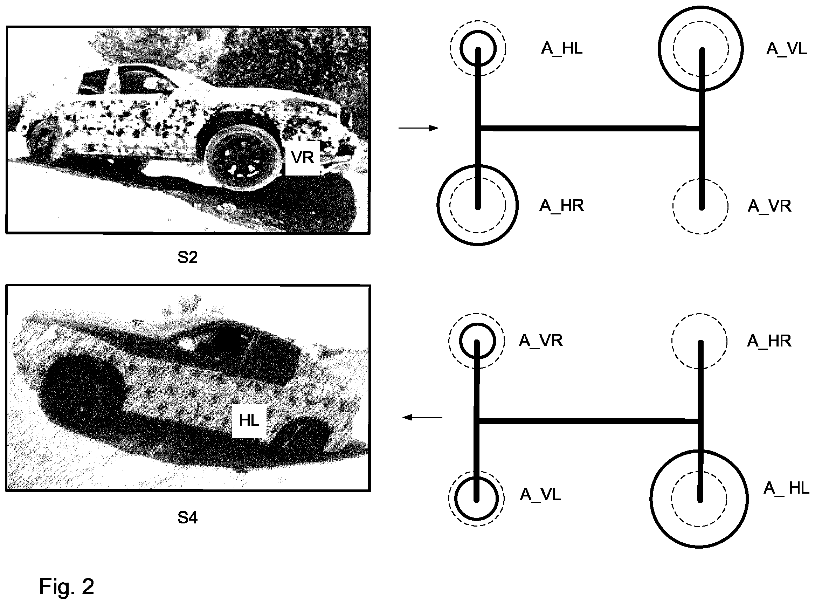

Durch Auswertung dieser Eingangssignale können zumindest die relativen Aufstandskräfte an den einzelnen Rädern geschätzt werden (siehe Fig. 2):
A_VR
A_VL
A_HR
A_HL

Die Steuereinheit 1 ist insbesondere durch eine entsprechende Eingangssignalauswertung und durch entsprechende Programmodule, z.B. ein Situationserkennungsmodul M1 und ein Bremsdruckbestimmungsmodul M2, derart ausgestaltet, dass im Stillstand des Kraftfahrzeuges eine automatische Feststellbremsfunktion mit folgenden Funktionselementen aktiviert wird:
- bei Vorliegen einer Aktivierungsbedingung für die Feststellbremsfunktion wird der hierfür erforderliche Gesamt-Bremsdruck zumindest abhängig von der Längsneigung N_L und abhängig von den geschätzten Aufstandskräften aller Räder bestimmt
- der Bremsdruck p wird umso höher vorgegeben je mehr Räder eine reduzierte Aufstandskraft A aufweisen.

Die Erfindung wird nur dann angewendet, wenn zumindest die Längsneigung N_L größer als ein vorgegebener Schwellwert ist.

Im Ausführungsbeispiel nach Fig. 1 sind folgende Situationen im Zusammenhang mit der Aufstandskraftverteilung erkennbar:
S1: Die Aufstandskraft A wird auf drei Räder verteilt, ein Rad hängt beispielsweise in der Luft.
S2: Die Aufstandskraft A wird auf zwei Räder auf der gleichen Längs-Seite verteilt (z.B. µ-Splitt Situation).
S3: Die Aufstandskraft A wird auf zwei Räder diagonal verteilt.
S4: Die Aufstandskraft A wirkt im Wesentlichen auf nur ein Rad, z. B. bei Stillstand diagonal zum Hang.

Es können weitere Situationen erkennbar sein.

Erfindungsgemäß wird jeder dieser Situation eine für die Feststellbremsfunktion erforderliche Gesamt-Bremskraft zugeordnet. Die Gesamt-Bremskraft kann durch Addition einer Basis-Bremskraft p mit einem Offset-Wert +Δp bestimmt werden. Im dargestellten Ausführungsbeispiel sind den Situationen S1 bis S4 die Offset-Werte +Δp1 bis +Δp4 zugeordnet, wobei Δp1<Δp2≤Δp3<Δp4 gilt.

In Fig. 2 oben ist eine Offroad-Situation gemäß S1 und in Fig. 2 unten ist eine Offroad-Situation S4 in Realität dargestellt. Neben den jeweiligen Situationen S1 und S4 sind die jeweils möglichen geschätzten Aufstandskräfte bzw. die Aufstandskraftverteilung gezeigt. Gestrichelt wäre z.B. die Aufstandskraft in der Ebene, wenn die Bremskraft gleichmäßig auf alle Räder verteilbar wäre, oder ein unterer Grenzwert. Die durchgezogenen Kreise zeigen jeweils schematisch die Aufstandskraftverteilungen für S1 und S4.

In Situation S2 der Fig. 2 ist die Aufstandskraft A_VR durch das in der Luft hängende Rad VR Null und die Aufstandskraft A_HL sehr gering, was beispielsweise durch den Radhöhenstand h_VR und h_HL und/oder erhöhten Schlupf VR und HR beim Einfahren in die Fahrsituation erkennbar wäre. Somit würde auf die übrigen drei Räder die Gesamt-Bremskraft p+Δp1 aufgebracht werden.

In Situation S4 der Fig. 2 sind die Aufstandskräfte A_VR, A_VL und A_HR für eine ausreichende Bremskraft-Ausübung zu gering (z. B. kleiner als der gestrichelt dargestellte Normalwert als unterer Grenzwert), was beispielsweise durch den Radhöhenstand h_VR und/oder die starke Fahrzeugquerneigung N_Q und/oder erhöhten Schlupf an VR, VL und HR beim Einfahren in die Fahrsituation erkennbar wäre. Somit würde insbesondere auf das Rad HL die Gesamt-Bremskraft p+Δp4 aufgebracht werden.

Die erfindungsgemäße Bremskrafterhöhung ist immer dann besonders bevorzugt anwendbar, wenn das Fahrzeug vergleichsweise stark längs und/oder quer geneigt ist und gegebenenfalls zusätzlich mindestens ein Rad in der Luft hängt.

## Patentansprüche

1. Bremsregelungssystem für ein Kraftfahrzeug (2) mit einer elektronischen Steuereinheit (1) dergestalt, dass damit im Stillstand des Kraftfahrzeuges (2) eine automatische Feststellbremsfunktion aktivierbar ist, **dadurch gekennzeichnet, dass** die Steuereinheit (1) weiterhin derart ausgestaltet ist, dass bei Vorliegen einer Aktivierungsbedingung für die Feststellbremsfunktion der hierfür erforderliche Bremsdruck zumindest abhängig von der Längsneigung (N_L) und abhängig von einer geschätzten Aufstandskraftverteilung (S1, S2, S3, S4) und/oder Momentübertragungsfähigkeit aller Räder bestimmbar ist.

2. Bremsregelungssystem nach Patentanspruch 1, **dadurch gekennzeichnet, dass** der Bremsdruck (p) umso höher vorgebbar ist je mehr Räder eine reduzierte Aufstandskraft (A) und/oder Momentübertragungsfähigkeit aufweisen.

3. Bremsregelungssystem nach einem der vorangegangenen Patentansprüche, **dadurch gekennzeichnet, dass** mittels der Steuereinheit (1) erkennbar ist, welches Rad eine Aufstandskraft (A) und/oder Momentübertragungsfähigkeit unterhalb eines unteren Grenzwertes aufweist, wobei eine Verteilung der erforderlichen Bremskraft nur auf die Räder mit einer Aufstandskraft und/oder Momentübertragungsfähigkeit oberhalb dieses Grenzwertes vorgebbar ist.

4. Bremsregelungssystem nach einem der vorangegangenen Patentansprüche, **dadurch gekennzeichnet, dass** mittels der Steuereinheit (1) die Aufstandskraft (A) und/oder Momentübertragungsfähigkeit der einzelnen Räder auf Basis der Radaufhängungshöhe (h) der einzelnen Räder und/oder des Schlupfes der einzelnen Räder und/oder der Querneigung (N_Q) des Fahrzeuges (2) ermittelbar ist.

5. Bremsregelungssystem nach einem der vorangegangenen Patentansprüche, **dadurch gekennzeichnet, dass** die Steuereinheit (1) weiterhin derart ausgestaltet ist, dass der Reibwert der Fahrbahn am Ort des durch die Feststellbremsfunktion im Stillstand gehaltenen Kraftfahrzeugs (2) zumindest für die angetriebenen Räder (HL, VL, HR, VR) ermittelbar ist und der Bremsdruck auch abhängig vom Reibwert unterhalb der einzelnen zumindest angetriebenen Räder bestimmbar ist.

6. Anwendung des Bremsregelsystems nach einem der vorangegangenen Patentansprüche bei einem Allrad-Antrieb.

7. Anwendung des Bremsregelsystems nach einem der vorangegangenen Patentansprüche bei einem definierten Offroad-Betrieb.

## Claims

1. Brake control system for a motor vehicle (2), having an electronic control unit (1) in such a manner that that an automatic parking brake function can be activated by said electronic control unit (1) in the standstill of the motor vehicle (2), **characterized in that** the control unit (1) is furthermore designed in such a manner that, if an activation condition for the parking brake function is present, the brake pressure required for this purpose can be determined at least dependent on the longitudinal inclination (N_L) and dependent on an estimated contact force distribution (S1, S2, S3, S4) and/or torque transmission capability of all wheels.

2. Brake control system according to Patent Claim 1, **characterized in that** the brake pressure (p) can be predetermined to be higher, the more wheels have a reduced contact force (A) and/or torque transmission capability.

3. Brake control system according to one of the preceding patent claims, **characterized in that** it can be detected by means of the control unit (1), which wheel has a contact force (A) and/or torque transmission capability below a lower limit value, wherein a distribution of the required brake force only to the wheels can be predefined with a contact force and/or torque transmission capability above this limit value.

4. Brake control system according to one of the preceding patent claims, **characterized in that** the contact force (A) and/or torque transmission capability of the individual wheels on the basis of the wheel suspension height (h) of the individual wheels and/or of the slip of the individual wheels and/or of the transverse inclination (N_Q) of the vehicle (2), can be identified by means of the control unit (1).

5. Brake control system according to one of the preceding patent claims, **characterized in that** the control unit (1) is furthermore designed in such a manner that the friction coefficient of the road surface can be identified on location of the motor vehicle (2), which is held in standstill by means of the parking brake function, at least for the driven wheels (HL, VL, HR, VR), and the brake pressure can also be determined dependent on the friction coefficient below the individual at least driven wheels.

6. Use of the brake control system according to one of the preceding patent claims in the case of an all-wheel drive.

7. Use of the brake control system according to one of the preceding patent claims in the case of a defined offroad operation.

## Revendications

1. Système de régulation de frein destiné à un véhicule automobile (2) et comprenant une unité de commande électronique (1) de sorte qu'une fonction de frein de stationnement automatique puisse être activée lorsque le véhicule automobile (2) est à l'arrêt, **caractérisé en ce que** l'unité de commande (1) est en outre conçue de telle sorte que, en présence d'une condition d'activation de la fonction de frein de stationnement, la pression de freinage nécessaire pour cela puisse être déterminée au moins en fonction de l'inclinaison longitudinale (N_L) et en fonction d'une répartition de forces de contact au sol estimée (S1, S2, S3, S4) et/ou de la capacité de transmission de couple de toutes les roues.

2. Système de régulation de frein selon la revendication 1, **caractérisé en ce que** la pression de freinage (p) peut être spécifiée d'autant plus élevée que les roues ont une force de contact au sol (A) et/ou une capacité de transmission de couple réduite.

3. Système de régulation de frein selon l'une des revendications précédentes, **caractérisé en ce que** l'unité de commande (1) peut détecter quelle roue a une force de contact au sol (A) et/ou une capacité de transmission de couple inférieure à une valeur limite inférieure, une répartition de force de freinage nécessaire pouvant être spécifiée uniquement sur les roues qui ont une force de contact au sol et/ou une capacité de transmission de couple supérieures à cette valeur limite.

4. Système de régulation de frein selon l'une des revendications précédentes, **caractérisé en ce que** l'unité de commande (1) peut déterminer la force de contact au sol (A) et/ou la capacité de transmission de couple des roues individuelles sur la base de la hauteur de suspension de roue (h) des roues individuelles et/ou du patinage des roues individuelles et/ou de l'inclinaison transversale (N_Q) du véhicule (2) .

5. Système de régulation de frein selon l'une des revendications précédentes, **caractérisé en ce que** l'unité de commande (1) est en outre conçue de telle sorte que le coefficient de frottement de la chaussée à l'emplacement du véhicule automobile (2) maintenu à l'arrêt par la fonction de frein de stationnement, peut être déterminé au moins pour les roues motrices (HL, VL, HR, VR) et la pression de freinage peut également être déterminée en fonction du coefficient de frottement au-dessous des roues au moins motrices individuelles.

6. Application du système de régulation de frein selon l'une des revendications précédentes à une transmission intégrale.

7. Application du système de régulation de frein selon l'une des revendications précédentes à un fonctionnement tout-terrain défini.
